# EUROPEAN PATENT APPLICATION

(11) **EP 1 293 542 A1**
(43) Date of publication of application: **19.03.2003**
(21) Application number: 02102327.0
(22) Date of filing: 06.09.2002
(51) Int. Cl.: C09C 1/56, C08K 9/02

(54) **Modified and metal treated carbon black with high density, a rubber composition comprising it and a tyre comprising said rubber composition**

(30) Priority: 12.09.2001 US 322898 P
(71) Applicant: THE GOODYEAR TIRE & RUBBER COMPANY, Akron, Ohio 44316-0001 (US)
(72) Inventor: Agostini, Giorgio, L-7733, Colmar-Berg (LU)
(74) Representative: Leitz, Paul

(57) **Abstract**

This invention relates to a relatively high specific gravity carbon black as a carbon black which has been modified to contain at least one metal compound on the surface of and within a carbon black as a composite thereof. Said modification of carbon black may be administered by a wet method in which the carbon black is coated with a suitable metal compound or by a hot method in which a carbon black is modified by co-fuming carbon black with a suitable metal compound. In further accordance with this invention, an article of manufacture is provided, such as for example a tire, having at least one component of a rubber composition which contains such modified, high specific gravity, carbon black composite.

## Description

### Field of the Invention

This invention relates to a relatively high specific gravity carbon black as a carbon black which has been modified to contain at least one metal compound on the surface of and within a carbon black as a composite thereof. Said modification of carbon black may be administered by a wet method in which the carbon black is coated with a suitable metal compound or by a hot method in which a carbon black is modified by co-fuming carbon black with a suitable metal compound. In further accordance with this invention, an article of manufacture is provided, such as for example a tire, having at least one component of a rubber composition which contains such modified, high specific gravity, carbon black composite.

### Background for the Invention

Carbon blacks are conventionally used for reinforcing various rubber compositions. Such conventional rubber reinforcing carbon blacks typically have a specific gravity in a range of 1.75 to 1.85kg/dm³.

It has heretofore been suggested to modify such carbon blacks, for example, by reaction with various siloxane compounds and by co-fuming with silica compounds to impart silica-based domains on the surface of the carbon black. Exemplary of such process is seen in WO 99/02614 and WO 99/20697 patent applications.

However, it is desired herein to utilize alternately modified carbon black composites to reinforce various diene-based elastomers.

In the description of this invention, the term "phr" where used herein, and according to conventional practice, refers to "parts of a respective material per 100 parts by weight of rubber, or elastomer".

The terms "rubber" and "elastomer" if used herein, may be used interchangeably, unless otherwise prescribed. The terms "rubber composition", "compounded rubber" and "rubber compound", if used herein, are used interchangeably to refer to "rubber which has been blended or mixed with various ingredients and materials" and such terms are well known to those having skill in the rubber mixing or rubber compounding art.

### Summary and Practice of the Invention

In accordance with this invention, a particulate carbon black composite having a specific gravity of at least 1.90 kg/dm³ (ASTM D-153) and preferably in a range of from 1.90 kg/dm³ to 3 kg/dm³, is prepared by
(A) a wet coating process which comprises:
   (1) coating a portion of the surface of particulate rubber reinforcing carbon black with at least one heavy metal compound in a sufficient amount to form said carbon black composite having a density of at least 1.90 kg/dm³ by blending, as a suspension in an organic solvent:
      (a) particles or rubber reinforcing carbon black, and
      (b) particles of at least one particulate heavy metal compound selected from:
         (i) salt of a heavy metal selected from carbonates, nitrates, oxylates, and halides thereof and oxides and hydroxides of heavy metals, wherein said of heavy metals selected from zinc, lead, tin, iron, aluminum, molybdenum, zirconium, and tungsten, and
         (ii) silicates and aluminosilicates of said heavy metals, and
         (iii) sodium salts of said heavy metals, and
   (2) transforming non-oxide coatings on said carbon black into an oxide thereof which contains hydroxyl groups on its surface, or by
(B) Co-fuming carbon black and at least one of said heavy metals and/or heavy metal compounds, which may optionally be used in a form of an organometallic heavy metal, or inorganic metal salt of at least one of said heavy metals, followed by transforming non-oxide heavy metals and/or heavy metal compound(s) on the surface of carbon black composite into an oxide thereof which contains hydroxyl groups on its surface;
wherein the specific gravity of said rubber reinforcing carbon black is increased by at least 0.05 kg/dm³ by the conversion thereof to said carbon black composite thereof by said wet coating process or by said co-fuming process.

A significance of such carbon black composite is that a modified carbon black can be provided which contains a low heavy metal content and also contains polar groups on its surface (e.g. hydroxyl groups) and which has a specific gravity similar to a specific gravity of aggregates of precipitated silicas.

This is considered herein to be significant because use of such modified carbon back enables the practitioner to adjust the specific gravity of the associated rubber composition (which contains the modified carbon black) to be similar to rubber composition which contains precipitated silica reinforcement and still utilize a coupling agent to aid in coupling the carbon black to diene-based elastomer(s) in a rubber composition.

Representative examples of such heavy metals and heavy metal compounds are, for example, compounds of zinc including zinc oxide, compounds of lead including lead oxide, compounds of tin including stannous oxide and stannic oxide, compounds of aluminum including aluminum oxide and aluminum sulfate and aluminum silicate, compounds of magnesium including magnesium silicates, compounds of iron including ferrous oxide and ferric oxide, compounds of molybdenum including molybdenum oxide, compounds of zirconium including zirconium oxide and compounds of tungsten including tungsten oxide.

Preferred heavy metal compounds are zinc oxide and stannous oxide and stannic oxide because such heavy metal oxides have intrinsically high specific gravities and than only small amounts may be used to impart a significant increase in the specific gravity of the modified carbon black composite.

Inorganic metal-silicate combinations of said heavy metal compounds, particularly combinations of zinc oxide, stannous oxide, stannic oxide, ferric oxide, ferrous oxide and zinc, tin and iron and molybdenum, molybdenum oxide, zirconium, zirconium oxide, tungsten and tungsten oxide with silicates and/or aluminosilicates may also be used in the practice of this invention for treatment of carbon blacks because it is considered herein that such combinations form stable constituents for the modified carbon black which also provide polar groups on the surface of the modified carbon black.

Representative of such combinations are, for example, magnesium iron silicate hydroxide, understood to be of a general formula (Mg,Fe)₃Si₂O₅(OH)₄); iron aluminum silicate, understood to be of a general formula Fe₃Al₂(SiO₄)₃; zoisite, understood to be of a general formula ZrSiO₄; acmite, understood to be of a general formula NaFe(+3)Si₂O₆; sodium tungstate, understood to be of a general formula NaWO₄*(H₂O)₂; sodium silicate, sodium metasilicate and sodium orthosilicate.

Such inorganic metal-silicate combinations may be formed on the surface of the carbon black to form carbon black composites for use in this invention by, for example, by,
(A) adding, in said wet process, instead of the heavy metal compound by itself, said heavy metal compound/silicate and/or heavy metal compound/aluminosilicate, or
(B) injecting, in said co-fuming process, instead of said heavy metal compound by itself, said heavy metal compound/silicate and/or heavy metal compound/aluminosilicate into the carbon black inducing flame of a carbon black reactor in order to favor he deposition thereof onto the carbon black surface.

In practice, for the wet treatment method, an organic solvent, or dispersant, might be used such as, for example, EDTA (ethylenediaminetetraacetic acid); or Triton X-100, an octyl phenol ethylene oxide condensate as CAS Number: 9002-93-1 from the Sigma-Aldrich company; (Triton X-100 is a trademark registered, as it is understood by the Rhom & Haas Company or by the Union Carbide Company).

Such wet treatment might be conducted, for example, by absorbing a salt of the heavy metal on the carbon black and/or by precipitating the corresponding heavy metal hydroxide, carbonate or oxalate on the carbon black suspension. For such treatment, a temperature in a range of from 10°C to 100°C, for example, might be used.

The transformation of the heavy metal coating on the carbon black to an oxide thereof may be accomplished, for example, by gently oxidizing the metal compound in the presence of, for example, air, ozone (O₃), potassium nitrate (KNO₃), sodium nitrate, hydrogen peroxide (H₂O₂) or potassium peroxodisulfate.

The co-fuming of the carbon black and heavy metal may be accomplished, for example, by introducing a heavy metal compound as an organometallic compound or inorganic salt or oxide of said heavy metal compound as a suspension process oil and the mixture co-fumed produce the carbon black composite at an elevated temperature of at least for example, 600°C.

In further accordance with this invention, a carbon black composite-containing rubber composition is provided which comprises, based upon parts by weight of an ingredient per 100 parts by weight of elastomer (phr);
(A) 100 phr of at least one diene-based elastomer
(B) 20 to 150, alternately 35 to 115, phr of at least one reinforcing particulate filler as:
   (1) about 20 to 100, alternately 30 to 80, phr of the carbon black composite of this invention which contains, on its surface, heavy metal oxides and hydroxyl groups on the surface of said heavy metal oxides,
   (2) from zero to 50, alternately 5 to 35, phr of at least one additional particulate reinforcing material selected from carbon black, aggregates of synthetic amorphous precipitated silica, starch/plasticizer composite, and silica treated carbon black having silica domains on its surface wherein said aggregates of precipitated silica and silica domains of said silica treated carbon black contain hydroxyl groups (e.g. silanol groups) in its surface, and
(C) a coupling agent for said carbon black composite, as well as said precipitated silica, starch/plasticizer composite and silica treated carbon black,
wherein said coupling agent contains a moiety reactive with hydroxyl groups contained on the surface of said carbon black composite, aggregates of precipitated silica and silica treated carbon black, and another moiety interactive with at least one of said elastomer(s).

In further accordance with this invention, an article of manufacture is provided having at least one component comprised of
(A) a rubber composition which contains the carbon black composite of this invention, or
(B) said carbon black composite-containing rubber composition.

In additional accordance with this invention, a tire is provided having at least one component comprised of
(A) a rubber composition which contains the carbon black composite of this invention, or
(B) said carbon black composite-containing rubber composition.

In further accordance with this invention, a tire is provided having a circumferential tread comprised of
(A) a rubber composition which contains the carbon black composite of this invention, or
(B) said carbon black composite-containing rubber composition.

Preferably, the said diene based elastomer is a homopolymer or copolymer of a conjugated diene such as, for example, isoprene and/or 1,3-butadiene or copolymer of at least one conjugated diene, such as for example isoprene and/or 1,3-butadiene, and a vinyl aromatic hydrocarbon such as, for example, styrene and alpha methyl styrene, preferably styrene.

Said elastomer may also include one or more organic solvent solution polymerization prepared elastomers of isoprene/butadiene copolymers, styrene/butadiene copolymers and styrene/isoprene/butadiene copolymers which are end functionalized with minor amounts of, for example, trialkoxysilane, dialkoxymonoalkyl silane, or primary or secondary amines such as, for example, gamma aminopropyltrialkoxy silane, ethanolamine or ethanol(methyl) amine. Such functionalizing of such elastomers is well known to those having skill in such art.

Tin coupled and/or tin end capped organic solvent solution derived elastomers of, for example styrene/butadiene, styrene/isoprene/butadiene and isoprene/butadiene copolymers may also be utilized which have been prepared, for example, by the polymerization of styrene, 1,3-butadiene and optionally isoprene monomers in an organic solvent solution in the presence of an alkyl lithium catalyst and organotin compound as is also well known to those having skill in such art.

Functionalized aqueous polymerization prepared styrene/butadiene copolymer elastomers (E-SBR) may also be used. Such elastomers may be prepared by, for example, copolymerizing the styrene and 1,3-butadiene with minor amounts of, for example, hydroxypropylmethacrylate (HPMA), acrylonitrile (ACN) or vinylpyridine. Such functionalizing of an E-SBR is well known to those having skill in such art.

Reinforcing carbon blacks and carbon blacks for preparation of the carbon back composite of this invention are carbon blacks typically suitable for reinforcing elastomers such as, for example, carbon blacks having an Iodine value in a range of 40 to 160 g/kg, a DBP (dibutylphthalate) value in a range of 80 to 180 cm³/100g and the nitrogen absorption number (BET) in the range of 50 to 200 m²/g. Reference may be made to The Vanderbilt Rubber Handbook (1990), Pages 416 through 418 for general descriptions of such carbon blacks. Representative of such carbon blacks are, for example and not intended to be limiting, are carbon blacks with ASTM designations of N110, N121, N234, N330, and N660.

While in the practice of this invention various coupling agents can be used, a typical coupling agent may be, for example, a bis-(trialkoxysilylalkyl) polysulfide containing sulfur atoms in range of from 2 to 6 or even up to 8 sulfur atoms, with an average of from 2 to 2.6 or from 3.5 to 4 sulfur atoms in its polysulfidic bridge. For example, the silica coupler can be bis-(3-triethoxy silylpropyl) polysulfide, including the disulfide and tetrasulfide versions thereof.

The rubber composition itself can also be provided as being a sulfur cured composition through vulcanization of the uncured elastomer composition. The sulfur curing is accomplished in a conventional manner, namely, by curing under conditions of elevated temperature and pressure for a suitable period of time.

The curatives for sulfur curing the rubber composition are curatives conventionally used for sulfur curable elastomers which typically include sulfur and one or more appropriate cure accelerators and sometimes also a retarder. Such curatives and use thereof for sulfur curable elastomer compositions are well known to those skilled in the art.

Sequential mixing processes for preparing sulfur curable rubber compositions in which elastomers and associated ingredients exclusive of curatives are first mixed in one or more sequential steps, usually called a "non-productive mixing step(s)" followed by a final mixing step for adding curatives, usually called a "productive mixing step", are also well known to those skilled in the art.

In the practice of this invention, as hereinbefore pointed out, the rubber composition may be comprised of at least one diene-based elastomer, or rubber. Such elastomers may be selected, for example and not intended to be limiting, from at least one of cis 1,4-polyisoprene rubber (natural and/or synthetic, and preferably natural rubber), styrene/butadiene copolymer rubbers whether prepared by aqueous emulsion of organic solvent solution polymerization of styrene and 1,3-butadiene, isoprene/butadiene copolymer rubbers, styrene/isoprene copolymer rubbers, styrene/isoprene/butadiene terpolymer rubbers, cis 1,4-polybutadiene rubber, trans 1,4-polybutadiene rubber, high vinyl polybutadiene rubber having a vinyl 1,2-content in a range of from 35 to 90 percent, and a minor amount, if used, of 3,4-polyisoprene rubber.

In one aspect, particularly for a tire tread, the rubber might be of at least two of diene based rubbers. For example, a combination of two or more rubbers is preferred such as cis 1,4-polyisoprene rubber (natural or synthetic, although natural is preferred), styrene/isoprene/butadiene rubber, emulsion and/or solution polymerization derived styrene/butadiene rubber, cis 1,4-polybutadiene rubbers, emulsion polymerization prepared butadiene/acrylonitrile copolymer and a minor amount of 3,4-polyisoprene rubber.

While the commonly employed synthetic siliceous pigments used in rubber compounding applications can be used, including pyrogenic and precipitated siliceous pigments, including aluminosilicates, precipitated silicas are usually preferred and the term "precipitated silica" as used herein is intended to include aluminosilicates formed by co-precipitation of silicates and aluminates.

The precipitated silica are typically obtained by the acidification of a soluble silicate, e.g., sodium silicate, generally exclusive of silica gels in which a suitable electrolyte is included.

Such silicas might be characterized, for example, by having a BET surface area, as measured using nitrogen gas, preferably in the range of 40 to 600, and more usually in a range of 50 to 300 square meters per gram (m²/g). The BET method of measuring surface area is described in the Journal of the American Chemical Society, Volume 60, Page 304 (1930).

The silica may also be typically characterized by having a dibutylphthalate (DBP) absorption value in a range of 100 to 400, and more usually 150 to 300 cc/100 gm.

Various commercially available precipitated silicas, namely silica aggregates which may be supplied in an agglomerated from of the aggregates, may be considered for use in this invention such as, and only for example herein, silicas commercially available from PPG Industries under the Hi-Sil trademark with designations 210, 243, etc; silicas available from Rhodia with, for example, designations of Zeosil 1165MP and Zeosil 165GR and silicas available from Degussa AG with, for example, designations VN2, VN3 and Ultrasil 7005 and from JM Huber as Zeopol 8745 and Zeopol 8715.

The starch/plasticizer composite for use in this invention is a composite of starch and plasticizer.

The starch is typically composed of amylose units and amylopectin units in a ratio of 5/95 to 35/65, for example and alternatively 15/75 to 30/70, and has a softening point according to ASTM No. D1228 in a range of 180°C to 220°C; whereas the starch/plasticizer composite has a softening point in a range of 110°C to 170°C according to ASTM No. D1228.

For the starch/plasticizer composite, starch to plasticizer weight ratio may be, for example, in a range of 0.5/1 to 4/1, alternatively 1/1 to 2/1, so long as the starch/plasticizer composition has the required softening point range, and preferably, is capable of being a free flowing, dry powder or extruded pellets, before it is mixed with the elastomer(s).

In practice, it is desired that the synthetic plasticizer itself is compatible with the starch, and has a softening point lower than the softening point of the starch so that it causes the softening of the blend of the plasticizer and the starch to be lower than that of the starch alone. This phenomenon of blends of compatible polymers of differing softening points having a softening point lower than the highest softening point of the individual polymer(s) in the blend is well known to those having skill in such art.

For the purposes of this invention, the plasticizer effect for the starch/plasticizer composite, (meaning a softening point of the composite being lower than the softening point of the starch), can be obtained through use of a polymeric plasticizer such as, for example, poly(ethylenevinyl alcohol) with a softening point of less than 160°C. Other plasticizers, and their mixtures, are contemplated for use in this invention, provided that they have softening points of less than the softening point of the starch, and preferably less than 160°C, which might be, for example, one or more copolymers and hydrolyzed copolymers thereof selected from ethylene-vinyl acetate copolymers having a vinyl acetate molar content of from 5 to 90, alternatively 20 to 70, percent, ethylene-glycidal acrylate copolymers and ethylene-maleic anhydride copolymers. As hereinbefore stated, hydrolysed forms of copolymers are also contemplated. For example, the corresponding ethylene-vinyl alcohol copolymers, and ethylene-acetate vinyl alcohol terpolymers may be contemplated so long as they have a softening point lower than that of the starch and preferably lower than 160°C.

In general, the blending of the starch and plasticizer involves what are considered or believed herein to be relatively strong chemical and/or physical interactions between the starch and the plasticizer.

Representative examples of synthetic plasticizers are, for example, poly(ethylenevinyl alcohol), cellulose acetate and diesters of dibasic organic acids, so long as they have a softening point sufficiently below the softening point of the starch with which they are being combined so that the starch/plasticizer composite has the required softening point range.

Preferably, the synthetic plasticizer is selected from at least one of poly(ethylenevinyl alcohol) and cellulose acetate.

For example, the aforesaid poly(ethylenevinyl alcohol) might be prepared by polymerizing vinyl acetate to form a poly(vinylacetate) which is then hydrolyzed (acid or base catalyzed) to form the poly(ethylenevinyl alcohol). Such reaction of vinyl acetate and hydrolyzing of the resulting product is well known those skilled in such art.

For example, vinylalcohol/ethylene (60/40 mole ratio) copolymers can conventionally be obtained in powder and in pellet forms at different molecular weights and crystallinities such as, for example, a molecular weight of about 11,700 with an average particle size of about 11.5 microns or a molecular weight (weight average) of about 60,000 with an average particle diameter of less than 50 microns.

Various blends of starch and ethylenevinyl alcohol copolymers can then be prepared according to mixing procedures well known to those having skill in such art. For example, a procedure might be utilized according to a recitation in the patent publication by Bastioli, Bellotti and Del Trediu entitled "A Polymer Composition Including Destructured Starch An Ethylene Copolymer", US-A-5,403,374.

Other plasticizers might be prepared, for example and so long as they have the appropriate Tg and starch compatibility requirements, by reacting one or more appropriate organic dibasic acids with aliphatic or aromatic diol(s) in a reaction which might sometimes be referred to as an "esterification condensation reaction". Such esterification reactions are well known to those skilled in such art.

It is readily understood by those having skill in the art that the rubber composition would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas as discussed herein, and plasticizers, fillers, pigments, fatty acid, zinc oxide, waxes, antioxidants and antiozonants, peptizing agents and reinforcing materials such as, for example, carbon black as discussed herein. As known to those skilled in the art, depending on the intended use of the sulfur vulcanizable and sulfur vulcanized material (rubbers), the additives mentioned above are selected and commonly used in conventional amounts.

It is to be appreciated that the silica coupler and/or the silica silylating agent, if in a liquid form, may be used in conjunction with a carbon black carrier, namely, pre-mixed with a carbon black prior to the addition to the rubber composition, and such carbon black is to be included in the aforesaid amount of carbon black accounted for in the rubber composition formulation.

Typical amounts of tackifier resins, if used, may be, for example, 0.5 to 10 phr, usually 1 to 5 phr. Typical amounts of processing aids comprise 1 to 50 phr. Such processing aids can include, for example, aromatic, napthenic, and/or paraffinic processing oils. Typical amounts of antioxidants comprise 1 to 5 phr. Representative antioxidants may be, for example, diphenyl-p-phenylenediamine and others such as, for example, those disclosed in The Vanderbilt Rubber Handbook (1978), Pages 344 through 346. Typical amounts of antiozonants comprise 1 to 5 phr.

Typical amounts of fatty acids, if used, which can include stearic acid, palmitic acid, linoleic acid or mixtures of one or more fatty acids, can comprise 0.5 to 3 phr.

Often stearic acid is used in a relatively impure state and is commonly referred to in the rubber compounding practice as "stearic acid" and is so referred to in the description and practice of this invention.

Typical amounts of zinc oxide comprise 2 to 5 phr. Typical amounts of waxes comprise 1 to 5 phr. Often microcrystalline waxes are used. Typical amounts of peptizers, if used, comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 4 phr, or even, in some circumstances, up to 8 phr, with a range of from 1 to 2.5, sometimes from 1 to 2, being preferred.

Accelerators are used to control the time and/or temperature required for vulcanization and to improve the properties of the vulcanizate. In one embodiment, a single accelerator system may be used, i.e., primary accelerator. Conventionally and preferably, a primary accelerator(s) is used in total amounts ranging from 0.5 to 4, preferably 0.8 to 2, phr. In another embodiment, combinations of a primary and a secondary accelerator might be used with the secondary accelerator being used in amounts of 0.05 to 3 phr in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound. The presence and relative amounts of sulfur vulcanizing agent and accelerator(s) are not considered to be an aspect of this invention which is more primarily directed to the preparation and use of the carbon black composite in a rubber composition.

The presence and relative amounts of the additives, as hereinbefore described, are not considered to be an aspect of the present invention which is more primarily directed to the preparation and utilization of the carbon black composite, unless otherwise indicated.

The ingredients are typically mixed in at least two stages, namely, at least one non-productive stage followed by a productive mix stage. The final curatives are typically mixed in the final stage which is conventionally called the "productive" mix stage in which the mixing typically occurs at a temperature, or ultimate temperature, lower than the mix temperature(s) than the preceding non-productive mix stage(s). Usually internal rubber mixers are used. The rubber, modified carbon black, as well as other reinforcing pigments if used, are typically mixed in one or more non-productive mix stage. The terms "non-productive" and "productive" mix stages are well known to those having skill in the rubber mixing art.

Usually the ingredients are thermomechanically mixed in one or more non-productive mixing (NP) mixing stages where the mixing temperature is allowed to reach a temperature between 140°C and 190°C.

Thereafter, sulfur and vulcanization accelerator(s) are blended therewith in a productive mixing stage, also usually in an internal rubber mixer, to a temperature in a range of 100°C to 120°C.

The rubber composition of this invention can be used for various purposes. For example, as hereinbefore discussed, it can be used for various tire compounds. Such tires can be built, shaped, molded and cured by various methods which are known and will be readily apparent to those having skill in such art.

## Claims

1. A particulate carbon black composite having a specific gravity of at least 1.90 kg/dm³ (ASTM D-153) **characterized by** being prepared by a process which comprises
(A) a wet coating process which comprises:
(1) coating a portion of the surface of particulate rubber reinforcing carbon black with at least one heavy metal compound in a sufficient amount to form said carbon black composite having a density of at least 1.90 kg/dm³ by blending, as a suspension in an organic solvent (a wet process):
(a) particles or rubber reinforcing carbon black, and
(b) particles of at least one particulate heavy metal compound selected from:
(i) salt of a heavy metal compound selected from carbonates, nitrates, oxylates, halides thereof and oxides and hydroxides of heavy metals, wherein said heavy metals are selected from zinc, lead, tin, iron, aluminum, molybdenum, zirconium, and tungsten, and
(ii) silicates and aluminosilicates of said heavy metals, and
(iii) sodium salts of said heavy metals, and
(2) transforming non-oxide coatings on said carbon black into an oxide thereof which contains hydroxyl groups on its surface, or by
(B) co-fuming carbon black and at least one of said heavy metals and/or heavy metal compounds, which may be optionally be used in a form of an organometallic heavy metal or inorganic metal salt of at least one of said heavy metals, followed by transforming non-oxide heavy metals and/or heavy metal compound(s) on the surface of carbon black composite into an oxide thereof which contains hydroxyl groups on its surface;
wherein the specific gravity of said rubber reinforcing carbon black is increased by at least 0.05 kg/dm³ by the conversion thereof to said carbon black composite thereof by said wet coating process or by said co-fuming process.

2. The process of claim 1 wherein said heavy metal compounds are selected from:
(A) zinc oxide lead oxide, stannous oxide, stannic oxide, aluminum oxide, aluminum sulfate, aluminum silicate, magnesium silicates, ferrous oxide, ferric oxide, molybdenum oxide, zirconium oxide and tungsten oxide and their mixtures; or
(B) zinc oxide, stannous oxide and stannic oxide and their mixtures;
wherein the specific gravity of said particulate carbon black composite is in a range of from 1.90 to 3.0 kg/dm³.

3. The process of claim 1 wherein a combination of said inorganic heavy metal compounds with silicates and/or aluminosilicates are used for said wet coating process or said co-fuming process-silicate

4. The process of claim 3 wherein said combinations are selected from magnesium iron silicate hydroxide of a general formula (Mg,Fe)₃Si₂O₅(OH)₄); iron aluminum silicate of a general formula Fe₃Al₂(SiO₄)₃; zoisite of a general formula ZrSiO₄; acmite of a general formula NaFe(+3)Si₂O₆; and sodium tungstate of a general formula NaWO₄*(H₂O)₂; and combinations of said heavy metal compounds with sodium silicate, sodium metasilicate and/or sodium orthosilicate.

5. The process of claim 1 wherein said carbon black composite is prepared by said wet process conducted by
(A) absorbing said salt of said heavy metal on the carbon black or
(B) by precipitating the corresponding heavy metal as an hydroxide, or said salt thereof on a carbon black suspension, followed by
(C) transforming a resultant non-oxide heavy metal coating on the carbon black to an oxide thereof by gently oxidizing the metal compound in the presence of air, ozone, potassium nitrate, sodium nitrate, hydrogen peroxide or potassium peroxodisulfate; or
wherein said carbon black composite is prepared by said co-fuming process wherein the co-fuming of the carbon black and heavy metal is accomplished by introducing said heavy metal compound as an organometallic heavy metal compound or inorganic salt or oxide of said heavy metal compound suspension with process oil and co-fuming the mixture at elevated temperature of at least 600°C; and
wherein said particulate rubber reinforcing carbon black for the preparation of the carbon black composite carbon blacks have an Iodine value in a range of 40 to 160 g/kg, a DBP (dibutylphthalate) value in a range of 80 to 180 cm³/100g and a nitrogen absorption number (BET) in the range of 50 to 200 m²/g.

6. A carbon black composite prepared according to the process of any of the preceding claims.

7. A carbon black composite-containing rubber composition which comprises, based upon parts by weight per 100 parts by weight of elastomer (phr);
(A) 100 phr of at least one diene-based elastomer
(B) 20 to 150 phr of at least one reinforcing particulate filler as:
(1) 20 to 100 phr of the carbon black composite of claim 6 which contains heavy metal oxides on its surface with associated hydroxyl groups,
(2) 5 to 35 phr of at least one additional particulate reinforcing material selected from carbon black, aggregates of synthetic amorphous silica, starch/plasticizer composite, and silica treated carbon black having silica domains on its surface wherein said aggregates of precipitated silica and silica domains of said silica treated carbon black contain hydroxyl groups (e.g. silanol groups) in its surface, and
(C) a coupling agent for said carbon black composite, as well as for said precipitated silica, starch/plasticizer composite and silica treated carbon black, wherein said coupling agent contains a moiety reactive with said hydroxyl groups on the surface of said carbon black composite, as well as said precipitated silica and silica treated carbon black, and another moiety interactive with at least one of said elastomer(s).

8. A tire having at least one component comprised of a rubber composition which contains said carbon black composite of claim 6.

9. A tire having a circumferential tread comprised of said rubber composition which contains said carbon black composite of claim 6.

10. A tire having at least one component comprised of the rubber composition of claim 7.
